(19) Europäisches Patentamt
European Patent Office
Office européen des brevets

(11) Veröffentlichungsnummer: **0 314 976**
**A2**

# (12) EUROPÄISCHE PATENTANMELDUNG

(21) Anmeldenummer: **88117294.4**

(51) Int. Cl.[4]: **C08G 63/60 , C09K 19/38**

(22) Anmeldetag: **18.10.88**

(30) Priorität: **31.10.87 DE 3736991**

(43) Veröffentlichungstag der Anmeldung: **10.05.89 Patentblatt 89/19**

(84) Benannte Vertragsstaaten: **DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Dicke, Hans-Rudolf, Dr.**
**Baumhofstrasse 28**
**D-5780 Bestwig(DE)**
Erfinder: **Eckhardt, Volker, Dr.**
**Bodelschwinghstrasse 14**
**D-4150 Krefeld(DE)**
Erfinder: **Bottenbruch, Ludwig, Dr.**
**Wöhlerstrasse 5**
**D-4150 Krefeld(DE)**

(54) **Thermotrope aromatische Polyester mit hoher Wärmeformbeständigkeit, Verfahren zu ihrer Herstellung und ihre Verwendung zur Herstellung von Formkörpern, Filamenten, Fasern und Folien.**

(57) Thermotrope vollaromatische Polyester auf Basis von p-Hydroxybenzoesäure, 4,4′-Dihydroxydiphenyl, Terephthalsäure und Isophthalsäure besitzen eine außergewöhnlich hohe Wärmeformbeständigkeit. Die thermotropen aromatischen Polyester finden Verwendung zur Herstellung von Formkörpern, Filamenten, Fasern und Folien.

EP 0 314 976 A2

Xerox Copy Centre

# Thermotrope aromatische Polyester mit hoher Wärmeformbeständigkeit, Verfahren zu ihrer Herstellung und ihre Verwendung zur Herstellung von Formkörpern, Filamenten, Fasern und Folien

Die Erfindung betrifft hochmolekulare thermothrope aromatische Polyester mit hoher Wärmeformbeständigkeit sowie guter thermoplastischer Verarbeitbarkeit, ein Verfahren zur Herstellung dieser Polyester sowie ihre Verwendung zur Herstellung von Formkörpern, Filamenten, Fasern und Folien.

Als "thermotrop" bezeichnet man solche Substanzen, die flüssigkristalline Schmelzen bilden. Thermotrope Polyester sind hinreichend bekannt, vergleiche z. B.

F. E. McFarlane et al., Liquid Crystal Polymers II, Contemporary Topics in Polymer Science, Vol. 2, Plenum Publishing Corporation, 1977;

W. J. Jackson und H. F Kuhfuss, J. Polymer Science, Polymer Chem. Ed. 14, 2042 (1976);

W. C. Wooten et. al. in A. Ciferri "Ultra-high Modulus Polymers", Applied Science Publ., London 1979, S. 362 f.;

A. Blumstein et al., "Liquid Crystalline Order in Polymers", Academic Press 1978;

J. Preston, Angew. Makromol. Chem. 109/110, 1 - 19 (1982);

A. Ciferri, W. R. Krigbaum, R. B. Meyer, "Polymer Liquid Crystals", Academic Press, New York, 1982;

EP-A 1 185, 8 855, 15 856, 17 310, 18 145, 22 344, 44 204, 49 615, 49 617, 53 940, 71 447, 74 700, 92 617, 102 160, 172 849, 187 734, 191 705;

US-PS 3 991 013, 3 991 014, 4 066 620, 4 083 829, 4 107 134, 4 153 779, 4 279 803, 4 294 955, 4 391 966, 4 529 565, 4 608 429;

WO 79/797, 79/1030, 79/1040

Der flüssigkristalline Zustand von Polyesterschmelzen läßt sich mit Hilfe eines Polarisationsmikroskops untersuchen; für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteilen eingestellt. Bei gekreuzten Nicolschen Prismen ergab sich dann ein Wert von 0,01 Skalenteilen.

Die Schichtdicke der untersuchten Polyesterschmelzen betrug 100 µm.

Die Untersuchung der Polyester erfolgte nach dem Aufschmelzen der Proben bei Temperaturen zwischen 300 und 430° C. Sofern in diesem gesamten Bereich oder in einem Teil davon eine Aufhellung der zwischen den gekreuzten Nicolschen Prismen beobachteten Schmelze auftrat, wurde der Polyester als thermotrop flüssigkristallin eingestuft.

Die flüssigkristallinen Polyester zeigen inder Meßanordnung Werte über 1 Skalenteil, meist Werte von 3 bis 90 Skalenteilen. Für amorphe Schmelzen, z. B. aromatische Polycarbonate, wurden dagegen Werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssigkristalliner Komponenten mittels Röntgenweitwinkelstreuung in der Schmelze nachzuweisen, wie es z. B. bei G. W. Gray und P. A. Windsor, "Plastic Crystals, Physico-Chemical Properties and Methods of Investigation", insbesondere Chapter 3, John Wiley & Sons, New York, Sydney, Toronto, 1974 beschrieben ist.

Aus thermotropen Polyestern lassen sich durch thermoplastische Verformung Formkörper und Folien sowie durch Verspinnen aus der Schmelze Filamente und Fasern mit außergewöhnlichen mechanischen Eigenschaften herstellen. Voraussetzung ist jedoch, daß die Polyester unzersetzt schmelzbar sind.

Die einfachsten vollaromatischen Polyester, wie Poly(4-hydroxybenzoat) und Poly-(1,4-phenylenterephthalat) erfüllen diese Voraussetzungen nicht; sie schmelzen unter Zersetzung erst bei etwa 600° C.

In DE-OS 20 25 971 sind vollaromatische Polyester auf Basis von p-Hydroxybenzoesäure, aromatischen Dicarbonsäuren, wie Isophthalsäure oder Terephthalsäure, und aromatischen Dihydroxyverbindungen wie Hydrochinon, Resorcin oder 4,4′-Dihydroxydiphenyl beschrieben worden. Bei eigenen Untersuchungen wurde gefunden, daß einige der in den Beispielen (s. Beispiele 1, 2, 3, 4, 9 und 11) aufgeführten Zusammensetzungen Wärmeformbeständigkeiten oberhalb von 200° C aufweisen. Die Verarbeitungstemperaturen für diese hochwärmeformbeständigen Polyester liegen aber bei Temperaturen oberhalb 400° C, so daß eine thermoplastische Umformung in konventionellen Aggregaten stark erschwert oder völlig unmöglich ist. Andererseits sind die in den Beispielen genannten niedriger schmelzenden Zusammensetzungen durch Wärmeformbeständigkeiten deutlich unterhalb von 200° C gekennzeichnet. Für viele Anwendungen sind diese Wärmeformbeständigkeitswerte nicht ausreichend.

Andere thermoplastisch verarbeitbare, thermotrope Polyester aus drei oder mehr Monomeren wurden beschrieben (z. B. DE-OS 27 04 315, 27 21 786, 27 51 653, 28 34 537, 28 44 817, 29 32 178, 29 63 833, bzw. EP-A 1 340, 30 182, 69 587). Allen diesen Produkten ist jedoch gemeinsam, daß bei einer Erniedrigung der Verarbeitungstemperatur unter 350 °C eine unerwünschte Reduzierung der Wärmeformbeständigkeit unter 200 °C eintritt. In einigen Fällen läßt sich die Wärmeformbeständigkeit durch eine thermische Nachbehandlung der aus diesen thermotropen Copolyestern hergestellten Filamente, Fasern, Folien oder Formkörpern erhöhen. Die thermische Nachbehandlung ist jedoch unwirtschaftlich.

Aufgabe der Erfindung ist es, thermotrope aromatische Polyester bereitzustellen, die trotz hoher Wärmeformbeständigkeit thermoplastische unzersetzt verarbeitet werden können.

Die Wärmeformbeständigkeit, gemessen nach HDT-A (ohne thermische Nachbehandlung), sollte mindestens 200 ° C, vorzugsweise mindestens 210 ° C betragen.

Die Verarbeitungstemperatur sollte bei < 380 ° C, vorzugsweise bei < 350 ° C liegen.

Darüber hinaus sollte die Differenz zwischen Verarbeitungstemperatur und Wärmeformbeständigkeit nicht größer als 140 ° C, vorzugsweise nicht größer als 120 ° C sein.

Überraschenderweise wurde gefunden, daß thermotrope Polyester die gewünschte Kombination vorteilhafter Eigenschaften dann besitzen, wenn sie aus p-Hydroxybenzoesäure, 4,4′-Dihydroxydiphenyl, Isophthalsäure und Terephthalsäure in genau definieten Konzentrationsverhältnissen aufgebaut sind.

Gegenstand der Erfindung sind also thermotrope Polyester mit wiederkehrenden Einheiten der Formeln

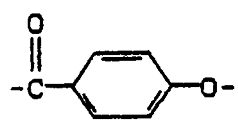

(I)

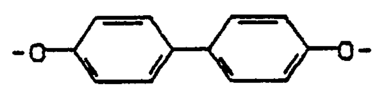

(II)

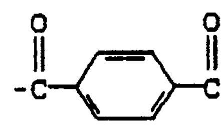

(III) und

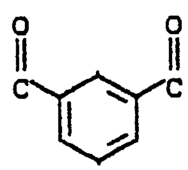

(IV),

wobei die Polyester die einkondensierten Reste
(I) in einer Menge von 74,5 bis 77,5, vorzugsweise 75 Mol-%,
und die einkondensierten Reste
(IV) in einer Menge von 9,5 bis 10,5, vorzugsweise 10 Mol-%,
jeweils bezogen auf die Summe der einkondensierten Reste (I), (III) und (IV), enthalten, und das Molverhältnis der einkondensierten Reste (II)/[(III) + (IV)] 0,95 bis 1,05 beträgt.

Die erfindungsgemäßen Polyester können die Reste der Verbindungen (I) bis (IV) in statistischer Verteilung, in Segmenten oder in Blöcken enthalten. Betreffend Komponente (I) ist darauf zu achten, daß längere Blöcke den Schmelzpunkt und die Schmelzviskosität stark erhöhen.

Als Endgruppen können die erfindungsgemäßen Polyester -COOH, -OH, $-OC_6H_5$, Acyloxy oder von Kettenabbrechern herrührende Reste enthalten. Bevorzugte Kettenabbrecher sind monofunktionelle aromatische Hydroxylverbindungen, wie 4-Hydroxydiphenyl, p-Nonylphenol, 4-(1,1,3,3-Tetramethyl-butyl)-phenol, β-Naphthol und aromatische Monocarbonsäuren, wie Diphenylcarbonsäuren und Naphthalincarbonsäuren. Kettenabbrecher können in Mengen von etwa 0,1 bis 10 Mol-%, bevorzugt 0,2 bis 5,0 Mol-%, bei Monohydroxylverbindungen bezogen auf Dihydroxydiphenyl, bei Monocarbonsäuren bezogen auf Dicarbonsäuren, eingesetzt werden.

Als Verzweigungsmittel können drei- oder höherfunktionelle, vorzugsweise drei- und vierfunktionelle - vorzugsweise aromatische - Monomere, wie Phloroglucin, 1,3,5-Benzoltricarbonsäure oder 3,5-Dihydroxybenzoesäure, in Mengen von etwa 0,1 bis 2, bevorzugt 0,2 bis 1,0 Mol-%, bei Poly- und Hydroxycarbonsäuren, bezogen auf Dicarbonsäuren, bei Polyolen bezogen auf Diphenole, eingesetzt werden.

Die erfindungsgemäßen Polyester sind in den von uns erprobten Lösungsmitteln, wie p-Chlorphenol und Phenol/1,1,2,2-Tetrachlorethan (1 : 1 Gewichtsteile), unlöslich.

Die erfindungsgemäßen Polyester besitzen im allgemeinen eine Schmelzviskosität von weniger als 1.000 Pa.s, bevorzugt 10 bis 500 Pa.s, gemessen bei einer Schergeschwindigkeit von $10^3$ $sec^{-1}$ unter Verwendung einer Düse mit einem Länge/Durchmesser-Verhältnis von 20 bei einer Temperatur < 380° C, vorzugsweise 330 bis 370° C.

Die erfindungsgemäßen Polyester können nach verschiedenen Verfahren hergestellt werden, z. B. durch Kondensation bzw. Umesterung der von den Resten I, II, III und IV abgeleiteten Hydroxycarbonsäuren, Dicarbonsäuren und Diphenole oder ihrer reaktionsfähigen Derivate und anschließende Polykondensation (vergl. z. B. R.W. Lenz, "Synthetic routes to liquid cristalline polymers" in: Recent Advances in Liquid Cristalline Polymers, Elsevier, New York, 1985).

Beispiele für bevorzugte Syntheseverfahren sind die Umsetzung der niederen Acylester der Verbindungen (I) und (II) mit Terephthalsäure (III) und Isophthalsäure (IV), wobei die Acylester auch in situ hergestellt werden können, sowie die Umsetzung der Arylester der Verbindungen (I), (III) und (IV) mit 4,4′-Dihydroxydiphenyl (II), wobei die Arylester ebenfalls in situ hergestellt werden können.

Nach einem besonders bevorzugten Syntheseverfahren werden die niederen Acylester, vorzugsweise die Acetate, der Verbindungen (I) und (II) mit Terephthalsäure (III) und Isophthalsäure (IV) umgesetzt, wobei die Acylester auch in situ hergestellt werden können.

Die Reaktionen können in der Schmelze oder in inerten hochsiedenden Lösungsmitteln durchgeführt werden (vergl. z. B. DE-OS 2 025 971).

Die reste der Verbindungen (I) bis (IV) werden im Verhältnis der Ausgangskomponenten in den Polyester eingebaut.

Es kann zweckmäßig sein, sowohl die Kondensations- bzw. Umesterungsreaktion als auch die Polykondensationsreaktionen katalytisch zu beschleunigen. Derartige Katalysatoren sind bekannt, z. B. Lewis-Säuren und Halogenwasserstoffsäuren; Oxide, Hydride, Hydroxide, Halogenide, Alkoholate, Phenolate, Salze anorganischer oder organischer Säuren (vorzugsweise Carbonsäuresalze), Komplexsalze oder Mischsalze der Erdalkalimetalle, wie Magnesium, Calcium; der Nebengruppenelemente, wie Vanadium, Titan, Mangan, Cobalt, Nickel, Zink, Lanthan, Cer, Zirkonium oder der Elemente aus anderen Gruppen des Periodensystems, wie Germanium, Zinn, Blei und Antimon oder auch Alkalimetalle oder Erdalkalimetalle selbst, insbesondere Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titanalkoxide, wie Titantetrabutylat, Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl- und Diarylzinnoxid, Dibutyl-zinndiacetat, Dibutyl-dimethoxy-zinn.

Die Katalysatormengen betragen vorzugsweise 0,001 bis 1, inbesondere 0,01 bis 0,2 Gew.-%, bezogen auf das Gesamtgewicht der eingesetzten Monomeren.

Die erfindungsgemäßen Polyester können bei Temperaturen von etwa 150° C bis 380° C hergestellt werden, wobei man im allgemeinen die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck auf ca. 0,1 mbar gesenkt wird.

Das erhaltene Produkt kann - vorzugsweise in Granulatform - einer Festphasennachkondensation unter vermindertem Druck bei Temperaturen von etwa 200° C bis 300° C, bevorzugt 240 bis 280° C, unterworfen werden; nach 1 bis 25 Stunden haben sich das Molekulargewicht erhöht und die daraus resultierenden Eigenschaften des Polyesters merklich verbessert.

Weiterer Gegenstand der Erfindung ist also ein Verfahren zur Herstellung der neuen Polyester, das dadurch gekennzeichnet ist, daß man die von den Resten I, II, III und IV abgeleiteten Hydroxycarbonsäuren, Dicarbonsäuren und Diphenole oder ihrer reaktiven Derivate, die auch in situ hergestellt werden können, gegebenenfalls in Gegenwart von Katalysatoren, Kettenabbrechern und Verzweigungsmitteln, bei Temperaturen von 150° C bis 380° C, gegebenenfalls unter vermindertem Druck umsetzt.

Die erfindungsgemäßen thermotropen Polyester können infolge ihrer relativ geringen Schmelzviskosität vorteilhaft aus der Schmelze zu Spritzgußformteilen, Filamenten, Fasern, Bändern und Filmen verarbeitet werden, wobei durch auftretende Scherkräfte eine Molekülorientierung erzielt wird, die in hohem Maße von der Stärke der Scherkräfte beeinflußt wird. Des weiteren zeigen sie eine ausgeprägte Strukturviskosität, d. h., daß die Schmelzviskosität bei Erhöhung der Scherkräfte stark abfällt. Geeignete Verarbeitungsverfahren sind Spritzguß, Extrusion, Pressen und Schmelzspinnen.

Aus den erfindungsgemäßen Polyestern können Formteile ausgezeichneter Steifigkeit und Zähigkeit, sehr hoher Wärmeformbeständigkeit und großer Dimensionsstabilität hergestellt werden. Da die Polyester außerordentlich chemikalienresistent und flammwidrig sind, eignen sie sich bevorzugt zur Herstellung von

- elektrotechnischen Artikeln, wie Isolatoren, gedruckten Schaltungen, Steckkontakten, Armaturenteilen, Umhüllungen von integrierten Schaltungen,
- Teilen chemisch-technischer Apparate, wie Rohren, Behälterauskleidungen, Rotoren, Gleitlagern, Dichtungen,
- Teilen der Flugzeuginnenausstattung,
- Teilen medizinisch-technischer Geräte sowie Bauteilen von Klimaanlagen und Ventilen.

Die erfindungsgemäßen Polyester können aber auch als Überzugs- und Beschichtungsmaterial (pulverförmig oder dispergiert) verwendet werden. Auch zur Herstellung verstärkter und/oder gefüllter Formmassen mit einem Verstärker- und/oder Füllstoffgehalt von 5 bis 65 Gew.-%, bezogen auf verstärkte und/oder gefüllte Formmassen, sind sie bestens geeignet.

Weiterer Gegenstand der Erfindung ist also die Verwendung der neuen Polyester zur Herstellung von Formkörpern, Filamenten, Fasern und Folien.

Beispiele

Die Bestimmung der Biegefestigkeit wurde an Biegestäben (80 mm x 10 mm x 4 mm) gemäß DIN 53 452 (ISO/R 178) durchgeführt. Am gleichen Prüfkörper erfolgte die Bestimmung des Biege-E-Moduls gemäß din 53 457. Die Messung der Wärmeformbeständigkeit wurde durch Bestimmung der HDT-A-Temperatur an Rechteckstäben (80 mm x 10 mm x 4 mm) gemäß DIN 53 461 (ISO 75) vorgenommen (Belastung: 181,5 $N/mm^2$). Die Prüfung der Schlagzähigkeit $a_n$ und der Kerbschlagzähigkeit $a_k$ erfolgte an 80 mm x 10 mm x 4 mm-Stäben gemäß DIN 53 453 (ISO/R 179).

Beispiel 1

In einen 1-1-Dreihalskolben mit Rührer, Stickstoffeinleitung und Destillationsaufsatz, der mit einem Kühler verbunden war, wurden die folgenden Substanzen eingewogen:

| | | | |
|---|---|---|---|
| 276 g | ≙ | 2 Mol | p-Hydroxybenzoesäure |
| 44,8 g | ≙ | 0,27 Mol | Isophthalsäure |
| 66,4 g | ≙ | 0,4 Mol | Terephthalsäure |
| 124,6 g | ≙ | 0,67 Mol | 4,4′-Dihydroxydiphenyl |
| 346,2 g | ≙ | 3,39 Mol | Acetanhydrid |
| 0,045 g | Magnesium | | |
| 0,225 g | Hydrochinonsulfonsäure-K-Salz | | |

Unter Stickstoffatmosphäre wurde mittels Ölbad auf 170° C erhitzt. Sobald die Destillation von Essigsäure nachließ (nach ca. 45 Minuten), wurde die Temperatur im Reaktionsgefäß im Verlauf einer weiteren Stunde auf 230° C, anschließend im Verlauf von 2 Stunden bis auf 300° C erhöht. Nach 75 min bei dieser Temperatur wurde Vakuum angelegt. Das Vakuum wurde im Verlauf von 50 min bis auf 0,5 mbar gesenkt, gleichzeitig wurde die Temperatur bis auf 350° C erhöht. Anschließend wurde das Ölbad entfernt und das erstarrte Produkt durch Zerschlagen des Kolbens isoliert. Der hellbeige Polyester wurde gemahlen und bei 350° C wurden daraus durch Spritzguß Prüfkörper (80 mm x 10 mm x 4 mm) hergestellt. Die Messung der Schmelzviskosität bei 350° C und einer Schergeschwindigkeit von $10^3 s^{-1}$ ergab einen Wert von 14,1 Pa.s. In Tabelle 1 sind die an den Prüfkörpern ermittelten mechanischen Eigenschaften aufgeführt.

Vergleich 1

In die in Beispiel 1 beschriebene Apparatur wurden die folgenden Substanzen eingefüllt:

| | | | |
|---|---|---|---|
| 275,6 g | ≙ | 2 Mol | p-Hydroxybenzoesäure |
| 66,4 g | ≙ | 0,4 Mol | Isophthalsäure |
| 44,8 g | ≙ | 0,27 Mol | Terephthalsäure |
| 124,6 g | ≙ | 0,67 Mol | 4,4′-Dihydroxydiphenyl |
| 346,2 g | ≙ | 3,39 Mol | Acetanhydrid |
| 0,045 g | Magnesium | | |
| 0,225 g | Hydrochinonsulfonsäure-K-Salz | | |

Nach dem in Beispiel 1 beschriebenen Temperatur/Zeit-Programm wurde ein hellbeiger Polyester erhalten. Die Ergebnisse der Schmelzviskositätsmessung und der Spritzguß-Prüfung sind in Tabelle 1 aufgeführt.

Vergleich 2

In der in Beispiel 1 beschriebenen Apparatur und nach dem dort erläuterten Verfahren wurde ein Polyester aus folgenden Ausgangssubstanzen hergestellt:

| | | | |
|---|---|---|---|
| 312 g | ≙ | 2,26 Mol | p-Hydroxybenzoesäure |
| 46,9 g | ≙ | 0,28 Mol | Isophthalsäure |
| 46,9 g | ≙ | 0,28 Mol | Terephthalsäure |
| 105,1 g | ≙ | 0,56 Mol | 4,4′-Dihydroxydiphenyl |
| 352,8 g | ≙ | 3,46 Mol | Acetanhydrid |
| 0,045 g | Magnesium | | |
| 0,225 g | Hydrochinonsulfonsäure-K-Salz | | |

Die Prüfergebnisse sind in Tabelle 1 ausgelistet.

Beispiel 2

In einen beheizbaren 400-1-Kessel aus V4A-Stahl mit Rührer, Stickstoffeinleitung und Destillationsaufsatz wurden die folgenden Substanzen eingefüllt:

| | | | |
|---|---|---|---|
| 48,99 kg | ≙ | 355 Mol | p-Hydroxybenzoesäure |
| 7,86 kg | ≙ | 47,3 Mol | Isophthalsäure |
| 11,78 kg | ≙ | 71 Mol | Terephthalsäure |
| 22,22 kg | ≙ | 119,3 Mol | 4,4′-Dihydroxydiphenyl |
| 61,79 kg | ≙ | 605,3 Mol | Acetanhydrid |
| 8 g | Magnesium | | |
| 40 g | Hydrochinonsulfonsäure-K-Salz | | |

Nach dreimaligem Evakuieren und anschließendem Belüften mit Stickstoff wurde der Kessel auf 170° C aufgeheizt. Stickstoff wurde mit einer Durchflußgeschwindigkeit von 20 l/h übergeleitet. Nach 1 Stunde bei 170° C wurde die Temperatur auf 200° C, nach 30 Minuten bei dieser Temperatur weiter auf 250° C erhöht. Schließlich wurde auf 330° C und nach weiteren 90 Minuten auf 340° C aufgeheizt. Vakuum wurde angelegt und der Druck im Kessel im Verlauf einer Stunde auf 30 mbar gesenkt. Der Kessel wurde dann mit Stickstoff belüftet und nach einer Absitzzeit von 30 Minuten wurde das Produkt durch ein Bodenventil herausgedrückt und granuliert.

Tabelle 1

| | pHB[1] | DOD[2] | IS[3] | TS[4] | $a_n/a_k$ | Biegefest. | Biege-E-M. | $\eta m^*$ | HDT-A | $T_{Verarb.}$ | T** |
|---|---|---|---|---|---|---|---|---|---|---|---|
| | | [Mol-%] | | | [kJ/m²] | [MPa] | | | [°C] | [°C] | [°C] |
| Bsp. 1 | 75 | 25 | 10 | 15 | 38/15 | 138 | 10.700 | 14,1 | 216 | 350 | 134 |
| Vergl. 1 | 75 | 25 | 15 | 10 | 39/16 | 126 | 7.700 | 56,6 | 156 | 350 | 194 |
| Vergl. 2 | 80 | 20 | 10 | 10 | 54/23 | 128 | 7.900 | 50,9 | 196 | 350 | 154 |
| Bsp. 2 a | 75 | 25 | 10 | 15 | 23/17 | 124 | 10.400 | 14,2 | 215 | 350 | 135 |
| 2 b | 75 | 25 | 10 | 15 | 37/21 | 141 | 11.100 | 14,2 | 226 | 330 | 104 |
| nachkond. 2c | 75 | 25 | 10 | 15 | 38/19 | 151 | 12.100 | 58,0 | 225 | 340 | 115 |

* = gemessen bei 350° C und einer Schergeschwindigkeit von $10^3 s^{-1}$

**T = $T_{Verarbeitung}$-HDT-A-Temperatur

1 pHB = p-Hydroxybenzoesäure

2 DOD = 4,4'-Dihydroxydiphenyl

3 IS = Isophthalsäure

4 TS = Terephthalsäure

Ein Teil des so isolierten hellbeigen Polyesters wurde im Vakuum bei 250° C in fester Phase nachkondensiert (20 Stunden).

Die bei der Schmelzviskositätsmessung und der mechanischen Prüfung dieser Produkte erhaltenen Werte sind in Tabelle 1 aufgeführt.

Durch die Beispiele und die Vergleichsbeispiele wird eindeutig belegt, daß nur in einem sehr engen Konzentrationsverhältnis die geforderten Eigenschaften realisiert werden können. Schon eine geringfügige Erhöhung der Konzentration an Isophthalsäure-Einheiten führt zu einer drastischen Verschlechterung der Wärmeformbeständigkeit. Aus einer Erhöhung der pHB-Konzentration resultiert eine deutliche Vergrößerung der Differenz aus Verarbeitungs-und HDT-A-Temperatur.

**Ansprüche**

1. Thermotrope vollaromatische Polyester auf Basis von
(I) p-Hydroxybenzoesäure,
(II) 4,4'-Dihydroxydiphenyl,
(III) Terephthalsäure und
(IV) Isophthalsäure,
wobei die Polyester die einkondensierten Reste
(I) in einer Menge von 74,5 bis 77,5 Mol-%
und die einkondensierten Reste
(IV) in einer Menge von 9,5 bis 10,5 Mol-%,
jeweils bezogen auf die Summe der einkondensierten Reste (I), (III) und (IV) enthalten und das Molverhältnis der einkondensierten Reste (II)/[(III) + (IV)] 0,95 bis 1,05 beträgt.

2. Polyester nach Anspruch 1, dadurch gekennzeichnet, daß sie die einkondensierten Reste
(I) in einer Menge von 75 Mol-%
und die einkondensierten Reste
(IV) in einer Menge von 10 Mol-%,
jeweils bezogen auf die Summe der einkondensierten Reste (I), (III) und (IV) enthalten.

3. Verfahren zur Herstellung der Polyester nach Ansprüchen 1 und 2, dadurch gekennzeichnet, daß man die reaktionsfähigen Derivate der Komponenten (I) bis (IV), die auch in situ hergestellt werden können, gegebenenfalls in Gegenwart von Kettenabbrechern, Verzweigungsmitteln und Katalysatoren, bei Temperaturen von 150 bis 380° C, gegebenenfalls unter vermindertem Druck umsetzt.

4. Verfahren nach Anspruch 3, dadurch gekennzeichnet, daß sich eine Festphasennachkondensation anschließt.

5. Verwendung der Polyester nach Ansprüchen 1 und 2 zur Herstellung von Formkörpern, Filamenten, Fasern und Filmen.

6. Formmassen auf Basis der Polyester nach Ansprüchen 1 und 2, dadurch gekennzeichnet, daß sie 5 bis 65 Gew.-%, bezogen auf die verstärkte und/oder gefüllte Formmasse, eines Verstärker- und/oder Füllstoffes erhalten.